# EUROPEAN PATENT APPLICATION

(11) **EP 1 367 517 A1**
(43) Date of publication of application: **03.12.2003**
(21) Application number: 02702839.8
(22) Date of filing: 08.03.2002
(51) Int. Cl.: G06F 17/60

(54) **NET ORDER SYSTEM**

(30) Priority: 08.03.2001 JP 2001065099
(71) Applicant: FUJITSU TEN LIMITED, Kobe-shi, Hyogo 652-8510 (JP)
(72) Inventor: MISHIMA, Masayuki, C/O FUJITSU TEN LTD, Kobe-shi, Hyogo 652-8510 (JP)
(74) Representative: Skone James, Robert Edmund
(86) International application number: JP0202195
(87) International publication number: WO02073486

(57) **Abstract**

The present invention relates to a sales/distribution system of a product, and provides, especially, a network order system including order-receiving, order-placement and delivery of a product. It is a network order system, for an user to purchase a product directly from a product provider through the Internet. It comprises the Internet, a client terminal which holds terminal identification information provided with a product sales permission from the product provider, and a server system which holds the terminal identification information and product sales related information corresponding thereto. The server system obtains product sales information from the client terminal identified by the client identification information through the Internet, and transmits the corresponding product sales related information to the identified client terminal.

## Description

### Technical Field

The present invention relates to a sale and distribution system, and especially relates to a network order system including order-receiving, order-placement through a network such as the Internet and also delivery of a product.

### Background Art

Because the Internet has become widespread recently, a distribution style has been changed from a so-called pyramid type distribution composed of existing manufacturers, wholesalers, retailers nearest to end users, and so on, to a direct-selling type distribution where a consumer directly accesses, through the Internet, a webpage of a manufacturer or a webpage of a commission sales agent on the Internet to which a manufacturer commissioned a sale of a product, and purchases a desired product.

In case of the latter, at first, a consumer searches for a desired product on the Internet and reviews the appearance, the performance, the cost, etc., of the product. As a result, when the consumer decides to purchase the product, the purchaser inputs his or her name, address, telephone number, credit card number, etc., to given fields of the webpage so as to complete the payment for the product. The consumer may use a payment procedure over a telephone, or the like. When the purchased product is a software product, the product may be downloaded directly from the Internet. In case of any other general product, the product will be delivered to the consumer's house later by a product deliverer, or the like, contracted to the manufacturer, or the like.

In the above-mentioned direct-selling system through the Internet, there is a tendency that, especially, existing retailers are excluded from the distribution system, from the viewpoint of reducing distribution costs. As an example, a person who wants to purchase a product visits a retailer which sells the product at the store. The person gets explanation of the product from the salesclerk of the store, and looks at and operates the actual product. Then, the person decides to purchase the product.

However, the person does not purchase the product immediately. Later, the person searches a site selling the product, through the Internet. When the person finds plural sites, he/she purchases the product from the site that sells the product at the lowest price. In this case, the above-mentioned retailer provides a specific service to a customer such as displaying the product in the store, providing explanation of the product if necessary, and so on. However, the retailer obtains nothing in exchange, and this causes a problem that the retailer will have financial difficulties.

On the other hand, a person who wants to purchase a product desires to get an explanation of the product, and looks at and operates the actual product, at the time of deciding the purchase of the product. This is especially desired if the product to be purchased is a new product, or an audio device, etc., where an actual test is required. However, if the number of retailers decreases for the above-mentioned reasons, as a result, the purchase itself is withheld. Accordingly, the direct-selling system through the Internet has a great advantage that a distribution cost is reduced, but it has a problem that a customer's incentive for purchasing a product is decreased.

Some people who want to purchase a cheap product by a direct-selling through the Internet, may be unfamiliar with accessing the Internet or an operation for purchasing a product of a webpage. Further, there are many people who dislike transmitting their credit card numbers through the Internet, which is required for purchasing a product. In these points, a direct-selling system through the Internet has been inconvenient for many consumers.

### Disclosure of the Invention

Considering the above-mentioned drawbacks, the object of the present invention resides in providing a network order system wherein a general consumer can purchase a product in a conventional way, without feeling uncomfortable, and can receive a benefit of a direct-selling system of a manufacturer, etc., by establishing a retail-store system. In the retail-store system, a general consumer can call at a store to look at an actual product and receive explanation of the product, on the precondition that a direct-selling system of a manufacturer, etc., through a network, such as the Internet, will be used. Further, a representative service including accessing a webpage of a manufacturer on the Internet, payment for a purchased product, or the like, is provided.

According to the present invention, a network order system, for a user to purchase a product directly from a product provider through a network such as the Internet, which comprises the Internet, a client terminal which holds terminal identification information provided with a product sales permission from the product provider, and a server system which holds the terminal identification information and product sales related information corresponding thereto, wherein the server system obtains product sales information from the client terminal identified by the client identification information through the network and transmits the corresponding product sales related information to the identified client terminal, is provided.

The client terminal is placed at a sales outlet having permission to sell a product of the product provider, and the sales outlet is paid in accordance with the content of the product sales information. The server system comprises a first server system which holds the terminal identification information and the corresponding product sales related information and a second server system which responds to an access by the client terminal through a network, wherein the first and second server systems cooperate to process the terminal identification information and the product sales related information, through a network. Further, the server system accepts an access, for purchasing a product, from the user through the network.

### Brief Description of the Drawings

Fig. 1 shows an example of an Internet order system of the present invention.
Fig. 2 illustrates an example of an access to a virtual store system by a general user or a sales outlet.
Fig. 3 shows an example of a constitution of a network of an Internet order system of the present invention.
Fig. 4 shows an example of information managed by a computer and a database of the company A.
Fig. 5 shows an example of a method for payment for the product by an user, and a delivery method after the payment.

### Best Mode for Carrying out the Invention

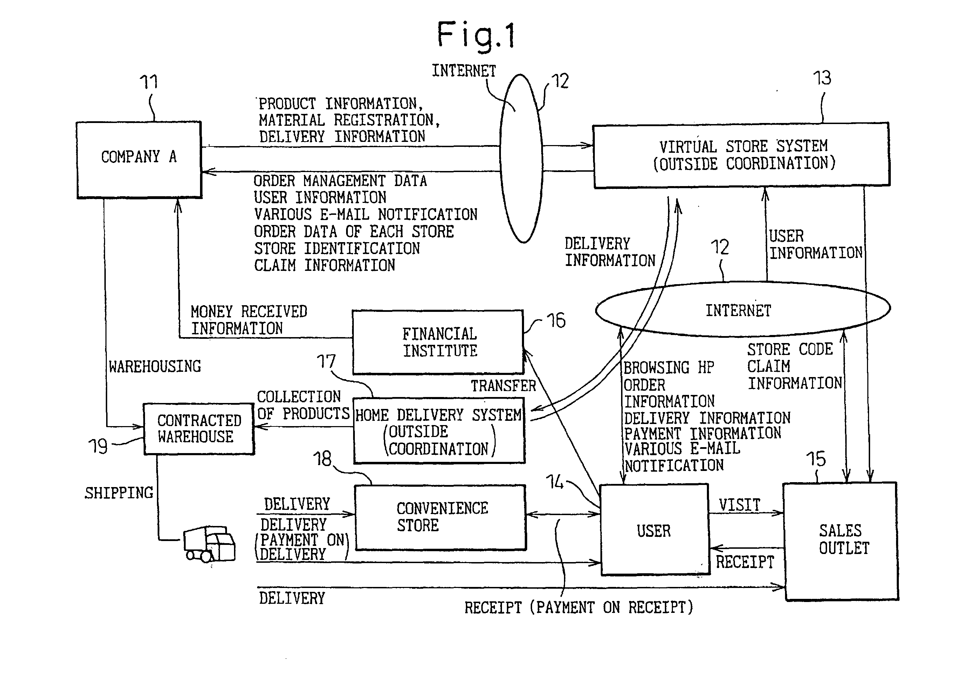

Fig. 1 shows an example of a network order system of the'present invention.

In Fig. 1, a company A 11 provides their product "a" by a direct-selling through the Internet 12. In this example, the company A 11 structures its store A in a virtual store system 13, such as a virtual shopping mall, provided on a site of an outside application service provider (ASP), etc.

In this embodiment, two methods are provided for a general consumer to access the store A.

The first method is a conventional method in which a user 14 accesses the store A, through the Internet, using a personal computer, or the like, at his/her house. The user 14 looks at a catalog, a photograph and a product explanation of the product "a" and makes a decision in terms of its performance, cost and his/her own taste.

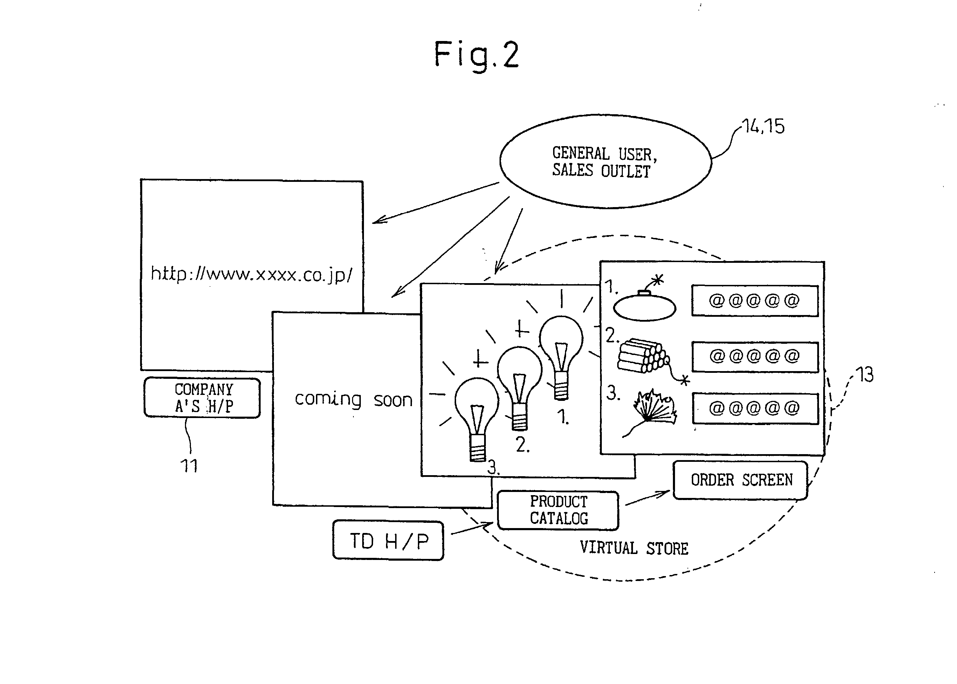

Fig. 2 illustrates an example of a method where the general user 14 (or a sales outlet 15, explained below) accesses the store A in the virtual store system 13.

As shown in Fig. 2, at first, the user 14 accesses the webpage of the company A 11, usually using a search engine, etc., on the Internet 12.

Then, the user jumps to the first page of the store A in the virtual store system 13, which is linked therefrom. In the present example, the first page of the store A displays an order screen for three products 1 to 3 (for example, the product 2 corresponds to the product "a"). The next page displays a product catalog explaining these products. In the last page, a product that is slated to be released in the future is introduced.

As a general operation, for example, when the user 14 connects to the webpage, a general outline (name, brief explanation, photograph) of (plural) product(s) are displayed. When an operation of selecting a product (click) is performed, the details (detailed specification, detailed photograph, etc.) of the product is displayed (the order button is located in the screen displaying the details). Then, when the order button is operated, an order screen is displayed.

In the order screen, when the necessary data (orderer identification information (name, telephone number, e-mail address, etc.), quantity of order items, method of payment, etc.) is inputted, and the order button is operated, the order is placed. If the below-mentioned shopping cart function is used, the data is recorded in the order list. (In this case, the screen should be called an order-selecting screen rather than an order screen.)

If the shopping cart is provided, when a product desired to be purchased is selected (by inputting necessary information such as a quantity), selections are temporally stored one after another in a purchase list on a selecting screen. If a product described in the purchase list is selected and a cancel button is operated, the product is deleted from the purchase list. Then, when a completion switch is operated, an order screen appears. In the order screen, an operation such as inputting necessary data (orderer identification information (name, telephone number, e-mail address, etc.) and operating an order button to place the order, is performed.

After the user 14 decides to purchase the product "a", by performing the above-mentioned operations, the payment for the product is settled by credit-card transactions on the Internet using a payment screen, etc., of the store A, or by payment at a nearest financial institution 16, a convenience store 18, or the like. The purchased product "a" is delivered to the user's house, later, from a warehouse 19 of a contracted company which stores the product "a", by a home delivery company 17, etc.

In the second method, at first, the user 14 visits the sales outlet 15 of the product "a" and looks at the actual product. If necessary, the user receives explanation of the product "a" from a salesclerk, etc., at the store. In this case, the user 14 may be a person who wants to do his/her shopping normally, a person who is unfamiliar with the Internet access and the payment method thereof, a person who wants to look at the actual product "a", a person who wants to get an advice regarding the product "a" from a salesclerk, or the like.

On the other hand, the sales outlet 15 of the present example is a specific sales outlet which signs a sales contract with the company A 11 regarding the sales of the product "a", or to which is commissioned the sales of the whole products of the company A 11. The sales outlet corresponds to the conventional retailer. However, in order to maximize the advantages of a direct-selling system of a manufacturer through the Internet, the product "a" placed in the store is limited, in principal, to a sample product for display. Accordingly, the sales outlet 15 has no stock of the product "a"', and the product "a" is not distributed in the general market.

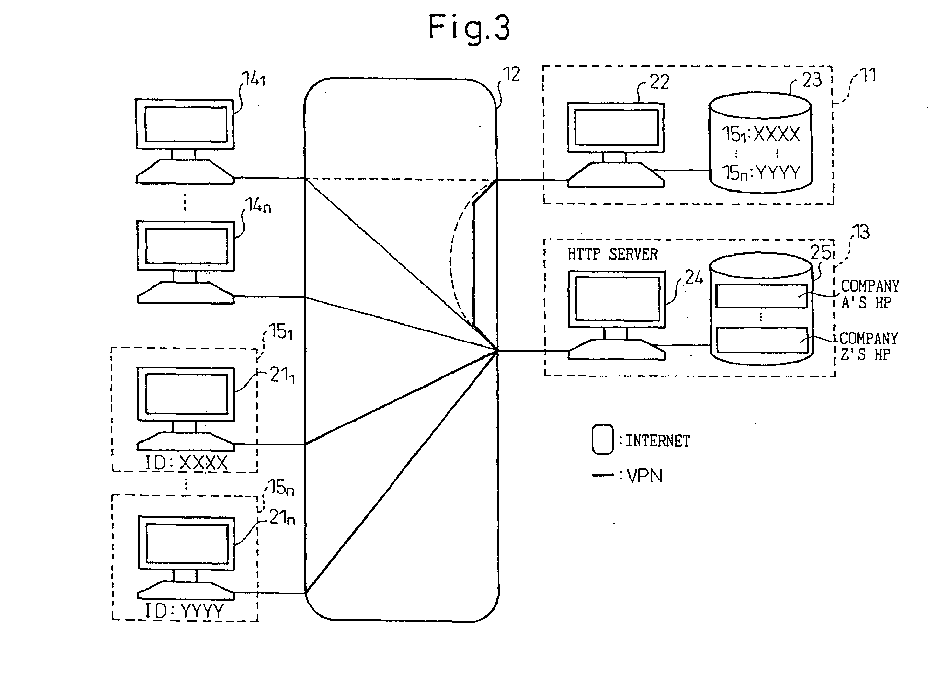

Fig. 3 shows an example of a network constituted of the user 14, the sales outlet 15, the company A 11 and the virtual store system 13, according to the network order system of the present invention.

As shown in Fig. 3, each user 14₁ to 14ₙ can access the store A in the virtual store system 13, through the Internet 12, by a personal computer, etc., at his/her house. As is shown by the dotted line for the user 14₁, the user may access the webpage of the company A 11 once, and, then, jump to the store A in the virtual store system 13 which is linked therefrom (see Fig. 2).

On the other hand, each sales outlet 15₁ to 15ₙ can also access the store A in the virtual store system 13, as in the case of above. However, in the present example, the Internet connection between each sales outlet 15₁ to 15ₙ and the virtual store system 13 is constituted with an encrypted path using VPN (Virtual Private Network) technology. Thus, the cost reducing effect obtained by the use of the Internet together with the confidentiality of the information flowing therein can be achieved. The similar constitution is adopted in the path where the co-operation information between the company A 11 and the virtual store system 13 flows.

The terminals 21₁ to 21ₙ composed of personal computers, etc., and placed within each sales outlet 15₁ to 15ₙ are given terminal identification codes (ID codes) and/or sales outlet identification codes. In the present example, the ID code of the terminal 21₁ is "XXXX" and the ID code of the terminal 21ₙ is "YYYY". These ID codes are stored in the database 23 which the company A's computer 22 uses.

Upon being accessed by each sales outlet 15₁ to 15ₙ through the Internet 12, the HTTP server 24 of the virtual store system 13 displays the first page of the company A's store "a" which is stored in the database 25 (see Fig. 2). The HTTP server also detects the ID code information (for example ID=XXXX, etc.) added to the access information, and notifies the information to the company A's computer 22 through the Internet 12.

The computer 22 of the company A 11 searches the database 23 based on the received ID code information (ID=XXXX), and in this case, provides, by itself, an information service which is to be provided to the sales outlet 15₁, through the HTTP server 24 of the virtual store system 13, or instructs the HTTP server 24 to provide the corresponding service.

Each terminal 15₁ to 15ₙ may be connected to the store A continuously, or may access the Internet 12 when necessary. The computer 22 placed in the company A 11 and the co-operating HTTP server 24 of the virtual store system 13 can easily distinguish the access by the plurality of sales outlets 15₁ to 15ₙ having sales contracts with the company A 11 from the access by general users 14₁ to 14ₙ. Thus, the company A 11 can provide various information service, which is not usually obtainable from the webpage, such as sales information of the product "a", corresponding customer information, etc., to each sales outlet 15 in real-time through the Internet.

The company A 11 can pay a corresponding commission to a predetermined financial institute, etc., based on the sales information of the product "a" from each sales outlet. As a result, the sales outlet 15 can obtain a commission from the company A corresponding to the sales of the product "a", instead of the conventional product sales at its own store. On the other hand, the user 14 who visits the sales outlet 15 can receive more and detailed information service than that he/she can receive when accessing the Internet by his/her own.

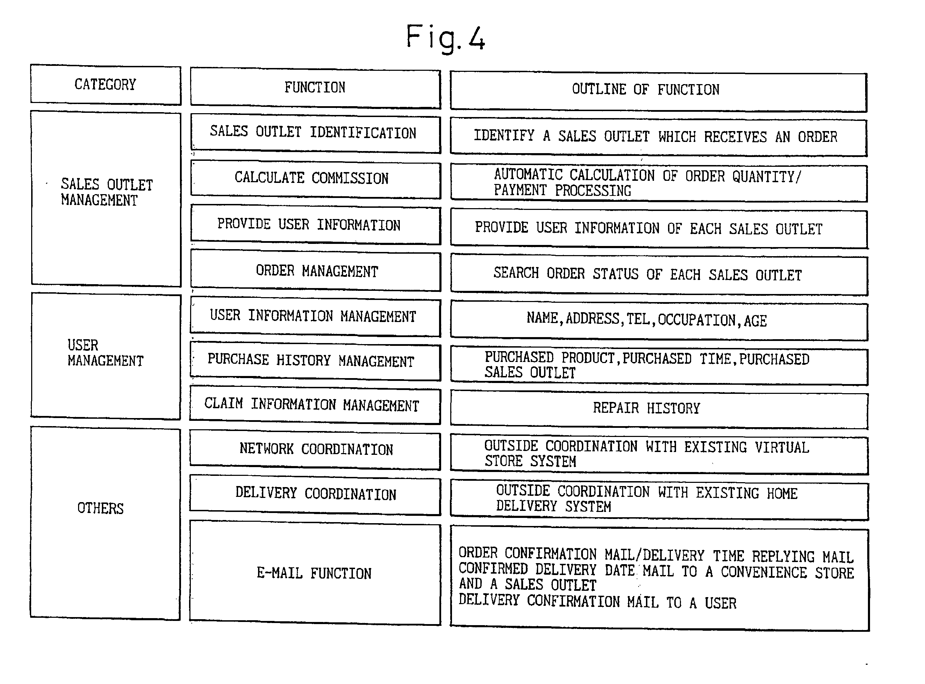

Fig. 4 shows an example of information managed by the computer 22 of the company A 11 and its database 23. Here, the information is divided into three types, the sales outlet managing information, the user management information and other information. In the sales outlet management information, orders and sales of each sales outlet, calculation and payment of the corresponding commission, user information for each sales outlet, etc. are managed.

For example, in the order management, the order data of each store (including a direct order from an individual) is stored and managed in the master database by the order data management. The order data stored in the master data is searched, based on various conditions (store, individual, processing status (waiting for ordering, during delivery, etc.), order period, etc.), by the order data search. A store and an individual can only search its own data online (an ID or secret code is required).

In the order specifications display, a product list for each order product and a processing status (waiting to be sent, being sent, etc.) are displayed. In the manufacturing status display, stock and a manufacturing plan are displayed. Expected days to delivery, etc., based on the order number data, etc., are also displayed. Further, in the store management, order status (track record) of each store is searched and displayed.

In the user management information, for example, orderer identification information (name, address, telephone number, occupation, age, e-mail address, etc.) are made into a database and are used for sending direct mails, confirming orderer, etc. The purchase histories are used for market analysis, sending direct mails, etc. Further, information of claims, etc., due to equipment failure, etc., is managed.

In the other information, information necessary for cooperation with the virtual store system 13, and information regarding arrangement/instructions of product delivery, sending direct mails, etc. are managed. For example, when an order is received, a purchasing condition and a payment condition are notified to the purchaser by e-mail, using the order confirmation mail. When an expected shipping date is confirmed, the confirmed expected date is notified to the purchaser by e-mail, using the expected shipping date notification.

If necessary, a store is notified by e-mail (an orderer can search and check his/her own order and a store can search and check its own order). Further, the completion of shipping is notified to a purchaser, a store, etc., by the shipping completion notification. Still further, a confirmed delivery schedule date is notified to a purchaser, a store, etc., by the store delivery schedule notification, when the product is delivered at the store. The date can be checked, similarly. The completion of delivery (arrival) is notified to a purchaser and a manufacturer (distributor on the network) by the store delivery completion notification.

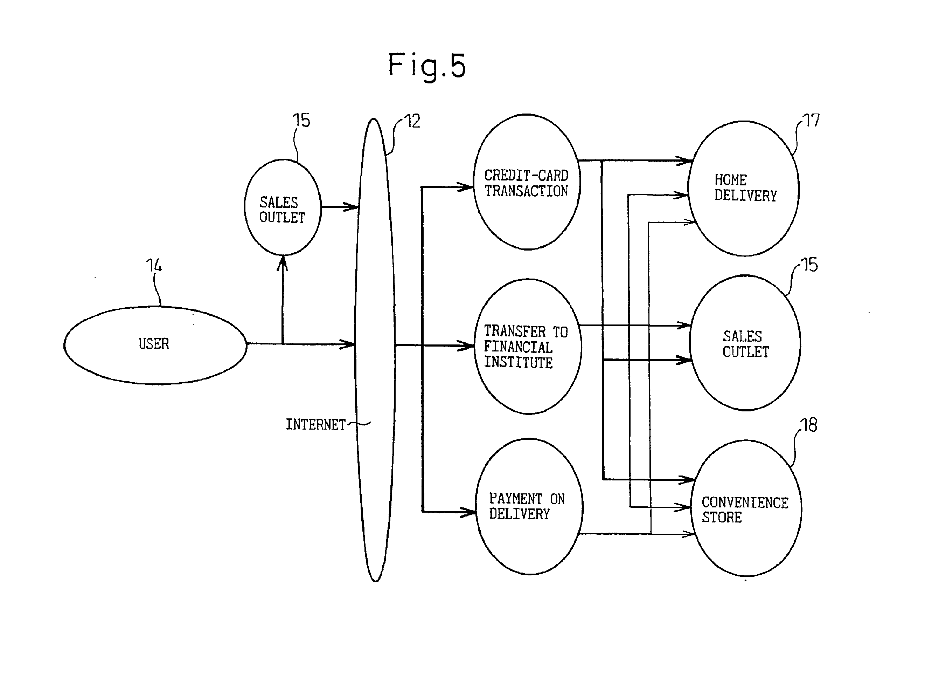

Fig. 5 shows an example of a payment method for a product by the user 14 and a delivery method of the product after the payment. Namely, the user can select credit-card transactions through the Internet 12, transfer to financial institutes or payment on receipt. In case of the payment on receipt, payment can be settled in cash or by a credit-card transaction. In this case, unlike the credit-card transactions through the Internet, transmission of a secret number is not required. This is effective for protecting individual information, which has good influence on. users' psychology and promotes the expansion of the Internet sales.

In any cases, the product itself is directly delivered to the user 14 in order to take advantages of the direct-selling system through the Internet. However, it is possible to make the delivery to the sales outlet where the user purchased the product or a specific convenience store, other than using the home delivery service to the user's house.

If a credit-card is used, a check is performed by connecting to a database of a credit-card company. It is preferable that a check is performed in another method by connecting to some database. In the case of a new orderer, an operator may telephone to the orderer later for confirmation (in case of the second time or later, confirmation can be performed by the past order data (ID code and secret code is given at the time of first order)).

As mentioned above, according to the present invention, when using a direct-selling system of a manufacturer through the Internet, a general user can visit the nearest sales outlet to look at the actual product and receive explanation of the product. Even in this case, a reduced-price product due to the direct-selling system with no intermediate distributor can be obtained.

## Claims

1. A network order system, for an user to purchase a product directly from a product provider through a network, comprises
a network,
a client terminal which holds terminal identification information provided with a product sales permission from the product provider, and
a server system which holds the terminal identification information and product sales related information corresponding thereto,
wherein, the server system obtains product sales information from the client terminal identified by the client identification information through the network, and transmits the corresponding product sales related information to the identified client terminal.

2. A network order system according to claim 1, wherein the client terminal is placed at a sales outlet having permission to sell a product of the product provider, and the sales outlet is paid in accordance with the content of the product sales information.

3. A network order system according to claim 1, wherein the server system comprises
a first server system which holds the terminal identification information and the corresponding product sales related information and
a second server system which responds to an access by the client terminal through the Internet,
wherein the first and second server systems cooperate to process the terminal identification information and the product sales related information, through a network.

4. A network order system according to any one of claims 1 to 3, wherein the server system accepts an access for purchasing a product from the user through the network.
